# EUROPÄISCHE PATENTSCHRIFT

(11) **EP 2 223 834 B1**
(45) Veröffentlichungstag und Bekanntmachung des Hinweises auf die Patenterteilung: **18.01.2012**
(21) Anmeldenummer: 10164659.4
(22) Anmeldetag: 06.02.2007
(51) Int. Cl.: B60W 10/06, B60W 10/08, B60W 20/00, B60W 10/18, B60W 30/18, B60K 6/48

(54) **Verfahren zum Betreiben eines Hybridfahrzeugs**
Process to control an hybrid vehicle
Procédé pour le contrôle d'un véhicule hybride

(30) Priorität: 24.02.2006 DE 102006008642
(43) Veröffentlichungstag der Anmeldung: 01.09.2010
(62) Teilanmeldung aus: 07704379.2
(73) Patentinhaber: Robert Bosch GmbH, 70442 Stuttgart (DE)
(72) Erfinder: Huber, Thomas, 74915, Daisbach (DE); Falkenstein, Jens-Werner, 73434, Aalen (DE)

(56) Entgegenhaltungen:
- EP-A1- 1 375 241
- FR-A1- 2 842 145
- JP-A- 2004 324 424
- US-A- 5 791 427
- US-A1- 2002 063 540
- US-A1- 2003 191 574

## Beschreibung

### Stand der Technik

Die Erfindung geht aus von einem Verfahren zum Betreiben eines Hybridfahrzeugs nach dem Oberbegriff des Anspruchs 1.

Hybridfahrzeuge sind bekannt. Die DE 102 03 760 A1 offenbart ein Verfahren zum Einstellen eines Soll-Betriebszustands eines Hybridfahrzeugs, bei dem eine Verbrennungskraftmaschine mit zwei Elektromaschinen wirkverbunden ist.

In solchen Hybridfahrzeugen wird ein negatives Antriebsmoment, das zum Verzögern des Fahrzeugs notwendig ist, gemeinsam von einem Verbrennungsmotor, einer oder mehreren Elektromaschinen und evtl. einer hydraulischen Bremse erzeugt. Ziel dabei ist, die hydraulische Bremse möglichst wenig einzusetzen und den Hauptanteil des negativen Antriebsmoments durch die Kombination von Verbrennungsmotor und einer oder mehrerer Elektromaschinen bereitzustellen. Der Anteil, der durch die Kombination von Verbrennungsmotor und Elektromaschine(n) bereitgestellt wird, ist im Folgenden mit Antriebsstrangmoment bezeichnet. Der Enteil, den die Elektromaschinen bereitstellen, wird zur Generierung von elektrischer Energie eingesetzt, die in einer Batterie gespeichert wird. Bei bekannten HEV wird zusätzlich die Kraftstoffeinspritzung in den Verbrennungsmotor unterbunden, um Kraftstoff einzusparen (Schubbetrieb). Der Verbrennungsmotor trägt in diesem Fall zum negativen Antriebsstrangmoment mit seinem Schleppmoment bei.

Aus der gattungsbildenden US 2003/191574 ist eine Bremseinrichtung für ein Fahrzeug bekannt, welche mittels des Drehwiderstands des Verbrennungsmotors eine Bremskraft auf das Fahrzeug wirken lässt indem die Kraftstoffzufuhr zum Verbrennungsmotor unterbrochen wird. Darüberhinaus wird auch ein elektrischer Generator zur Erzeugung einer Bremskraft an den Rädern genutzt.

### Vorteile der Erfindung

Bei dem erfindungsgemäßen Verfahren zum Betreiben eines Fahrzeugs mit einem Hybridantrieb wird zur Realisierung eines negativen Antriebsstrangsollmoments das negative Antriebsstrangsollmoment durch die Elektromaschine aufgebracht und die Verbrennungskraftmaschine weitestgehend außerhalb ihres Schubbetriebs betrieben. Damit kann beim Verzögern des Fahrzeugs besonders effizient elektrische Energie erzeugt werden. Erfindungsgemäß wird zur Generierung einer Schubanforderung der Verbrennungskraftmaschine das angeforderte Antriebsstrangsollmoment mit einem skalierten minimal möglichen Elektromaschinenmoment verglichen und bei Unterschreiten einer ersten Schwelle des Vergleichswerts eine Schubanforderung der Verbrennungskraftmaschine generiert.

Der Schubbetrieb des Verbrennungsmotors wird nach Möglichkeit vermieden. Vorteilhaft kann dadurch eine energie-, emissions- und komfortoptimierte Umsetzung eines negativen Antriebsstrangmoments in einem Hybridfahrzeug erfolgen. Durch die Vermeidung des Schubbetriebs und die Vermeidung des Wechsels zwischen Schub- und Verbrennungsbetrieb des Verbrennungsmotors können eine Reihe von im Folgenden aufgeführten Nachteilen vermieden werden:
- Bei der Umschaltung zwischen Verbrennungs- und Schubbetrieb kommt es zu einem Momentensprung an der Kurbelwelle des Verbrennungsmotors. Dieser wirkt sich negativ auf den Fahrkomfort aus.
- Im Schubbetrieb eines Verbrennungsmotors gelangt die angesaugte Luft in das Abgassystem. In Dreiwegekatalysatoren reichert sich der Luftsauerstoff an und muss bei den nächsten stattfindenden Einspritzungen durch Kraftstoffanreicherung kompensiert werden, um unerwünschte NOx-Emissionen zu vermeiden. Zudem kühlt der Katalysator durch die Zufuhr der Ansaugluft aus.

- Im Schubbetrieb des Verbrennungsmotors wird einem evtl. vorhandenen Abgasturbolader ein geringerer Abgasenthalpiestrom zugeführt als im Verbrennungsbetrieb. Dadurch verschlechtert sich das Ansprechverhalten des Abgasturboladers, wenn aus dem Schubbetrieb heraus eine Beschleunigung erfolgen soll.
- Ein Ablösen des Wandfilms bei SRE-Ottomotoren im Übergang von Verbrennungsbetrieb zu Schubbetrieb führt zu erhöhten HC-Rohemissionen durch unvollständige Verbrennung des Kraftstoffs.
- Ein Aufbau des Wandfilms bei SRE-Ottomotoren im Übergang von Schubbetrieb zu Verbrennungsbetrieb führt zu kurzfristig erhöhtem Kraftstoffverbrauch. Mit dem Wandfilmaufbau geht ein schlechteres transientes Verhalten der Lambdavorsteuerung einher.
- Das beim Schubbetrieb auf den Antriebsstrang wirkende Schleppmoment des Verbrennungsmotors steht der/den Elektromaschine/n nicht mehr zur Erzeugung von elektrischer Energie zur Verfügung.

Falls doch Schubbetrieb erforderlich ist, wird der Verbrennungsmotor bevorzugt so lange wie möglich im Schubbetrieb belassen, um häufiges Umschalten zwischen Schub- und Verbrennungsbetrieb zu vermeiden. Dabei kann die maximale Dauer des Schubbetriebs in einem günstigen Verfahrensschritt durch Anforderungen aus einem Abgasnachbehandlungssystem begrenzt sein, zum Beispiel um Auskühlen des Katalysators zu vermeiden.

In einem weiteren günstigen Verfahrensschritt werden Änderungen im abgegebenen Moment der Verbrennungskraftmaschine beim Übergang von Schubbetrieb in einen befeuerten Betrieb durch ein Moment der Elektromaschine kompensiert. Änderungen im abgegebenen Moment der Verbrennungskraftmaschine beim Obergang zwischen Schubbetrieb und Verbrennungsbetrieb sollen durch geeignete Ansteuerung der Elektromaschine(n) in ihrer Auswirkung auf das Antriebsstrangmoment so gut wie moglich kompensiert werden.

Vorzugsweise bleibt die Schubanforderung so lange erhalten, bis der Vergleichswert eine zweite Schwelle überschreitet.

Falls keine Schubanforderung vorliegt, kann vorzugsweise an die Verbrennungskraftmaschine ein erstes Sollmoment aus einer Maximalwertauswahl eines vorgegebenen Moments in Abhangigkeit vom angeforderten Antriebsstrangsollmoment und einem minimal moglichen Moment der Verbrennungskraftmaschine im befeuerten Betrieb ausgegeben werden.

Falls eine Schubanforderung vorliegt, kann an die Verbrennungskraftmaschine ein zweites Soll moment ausgegeben werden, das dem Schleppmoment der Verbrennungskraftmaschine bei der aktuellen Drehzahl entspricht.

Vorzugsweise werden die Übergange zwischen dem ersten Sollmomment und dem zweiten Soll moment rampenförmig gebildet.

Zweckmäßigerweise erfolgt bei unterschiedlicher Dynamik in den Momentenansteuerungen von Verbrennungskraftmaschine und Elektromaschine eine Kompensation in der Steuerung.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand von einem in Zeichnungen dargestellten Ausführungsbeispiel der Erfindung.

Im Folgenden zeigen:
- Fig. 1: schematisch einen Triebstrang eines parallelen Hybrid- fahrzeugs;
- Fig. 2: ein Schema zur Generierung einer Schubanforderung;
- Fig. 3: ein Schema zur Umsetzung einer Schubanforderung; und
- Fig. 4a,b: einen zeitlichen Ablauf einer Schubanforderung mit a: dem zeitabhängigen Momentenverlauf, und b: einem zeitabhängigen Verlauf eines Booleschen Werts zur Schubanforderung.

### Beschreibung des Ausführungsbeispiels

Aufbau und Wirkungsweise eines derartigen Hybridantriebs sind allgemein bekannt, so dass im Rahmen der vorliegenden Beschreibung nicht näher darauf eingegangen wird.

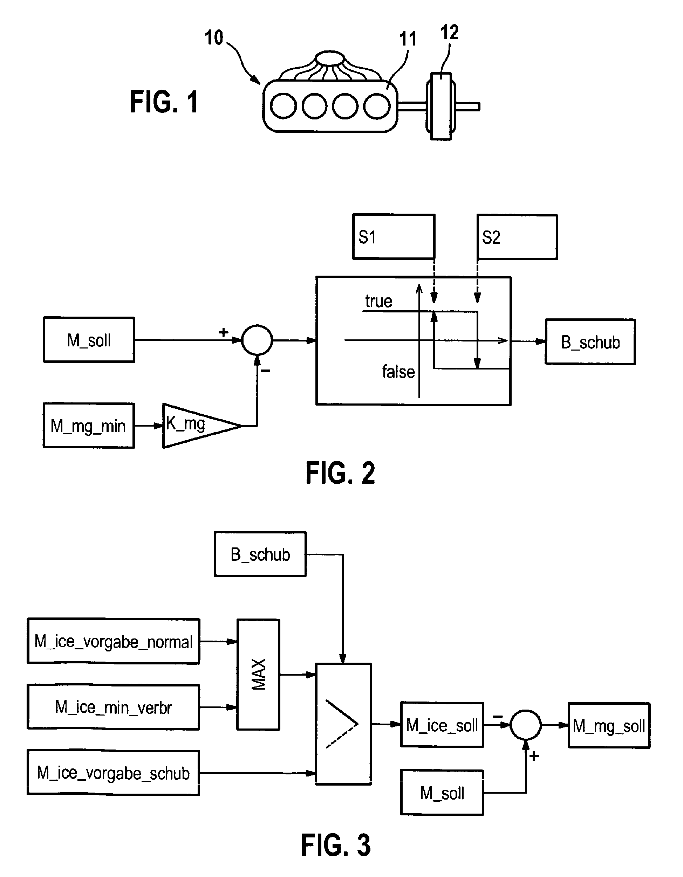

Fig. 1 zeigt schematisch als Realisierungsbeispiel der Erfindung einen Parallelhybrid-Antriebsstrand 10, bei dem deren Umsetzung bestehend aus einer Verbrennungskraftmaschine 11 und einer Elektromaschine 12 beschreiben wird.

Bei dem Antriebsstrang 10 ergibt sich ein Antriebsstrangmoment M_drivetrain aus der Addition des Moments M_ice der Verbrennungskraftmaschine 11 und des Moments M_mg der Elektromaschine 12 mit M_drivetrain=M_ice+M_mg.

Es gilt M_soll=M_ice_soll+M_mg_soll.

Zur Generierung einer Anforderung zum Schubbetrieb der Verbrennungskraftmaschine 11 wird das angeforderte Antriebsstrangsollmoment M_soll mit dem minimal möglichen Elektromaschinenmoment M_mg_min multipliziert mit einem applizierbaren Wert K_mg verglichen. Dabei berücksichtigt das minimal mögliche Elektromaschinenmoment M_mg_min den Betriebszustand der Elektromaschine 12 wie z.B. verschiedene Spannungen, verschiedene Ströme, Drehzahl, Temperatur und/oder Zustände des elektrischen Bordnetzes und eines Energiespeichers, insbesondere einer Batterie, wie z.B. einen momentanen Leistungsbedarf der elektrischen Verbraucher, Batterieladezustand und Batterietemperatur.

Bei geringem Ladezustand der Batterie ist z.B. das minimal mögliche Elektromaschinenmoment M_mg_min stark negativ, wodurch die Elektromaschine 12 im Generatorbetrieb eine hohe Ladeleistung erzeugen kann. Bei hohem Ladezustand der Batterie oder ungünstig hoher Batterietemperatur wird M_mg_min (in Richtung Nullmoment) angehoben, wodurch die Ladeleistung begrenzt wird.

Unterschreitet diese Differenz einen Schwellwert S1, wird eine Schubanforderung B_schub generiert. Diese bleibt so lange erhalten, bis die zu vergleichende Differenz einen Schwellwert S2 überschreitet. Dies ist in Fig. 2 dargestellt.

Die Schwellwerte Schwelle S1 und Schwelle S2 sind dabei abhängig vom Sollmoment M_soll, der aktuellen Drehzahl, dem minimalen Moment der Verbrennungskraftmaschine 11 im befeuerten Betrieb bei optimalem und bei schlechtestem Zündwinkelwirkungsgrad, dem Schleppmoment der Verbrennungskraftmaschine 11, der Katalysatortemperatur und dem aktuell abgegebenen Moment der Verbrennungskraftmaschine 11. Beispielhafte Schwellwerte wären das minimal mögliche Verbrennungskraftmaschinenmoment im befeuerten Betrieb bei schlechtestmöglichem Zündwinkelwirkungsgrad für Schwelle S1 und das das minimal mögliche Verbrennungskraftmaschinenmoment im befeuerten Betrieb bei optimalem Zündwinkelwirkungsgrad für Schwelle S2.

Die Umsetzung der Schubanforderung B_schub in Sollmomente für die Verbrennungskraftmaschine 11 und die Elektromaschine 12 beschreibt Fig. 3. Liegt keine Schubanforderung vor, also B_schub=false, wird an die Verbrennungskraftmaschine 11 ein Sollmoment M_ice soll aus der Maximalwertauswahl eines vorgegebenen Moments M_ice_vorgabe_normal in Abhängigkeit vom geforderten Sollmoment M_soll und einem minimal möglichen Moment der Verbrennungskraftmaschine im befeuerten Betrieb M_ice_min_verb, entweder mit oder ohne Beeinflussung des Zündwinkelwirkungsgrades, ausgegeben. Die Verbrennungskraftmaschine 11 ist damit in der Lage, das angeforderte Sollmoment M_soll näherungsweise umzusetzen.

Bei aktiver Schubanforderung, also B_schub=true, wird an die Verbrennungskraftmaschine 11 ein Sollmoment M_ice_soll=M_ice_vorgabe_schub übergeben, das dem Schleppmoment der Verbrennungskraftmaschine 11 bei der aktuellen Drehzahl entspricht. Damit wird die Verbrennungskraftmaschine 11 in den Schubbetrieb überführt, und das tatsächliche Moment der Verbrennungskraftmaschine 11 entspricht der Momentenvorgabe.

Damit kann das Sollmoment für die Elektromaschine 12 aus der Beziehung M_mg_soll=M_soll_M_ice_soll gewonnen werden.

Wenn also die Verbrennungskraftmaschine 11 ihr Sollmoment M_ice_soll umsetzt und die Elektromaschine 12 ihr Sollmoment M_mg_soll schnell einstellen kann, wird durch diese Ansteuerung der Momentensprung beim Übergang vom befeuerten Betrieb in den Schubbetrieb optimal kompensiert.

Es ist weiterhin günstig, wenn die Übergänge zwischen M_ice_soll=MAX(M_ice_vorgabe_normal, M_ice_min_verbr.) (d.h. Maximalwertauswahl zwischen M_ice_vorgabe_normal und M_ice_min_verbr.) und M_ice_soll=M_ice_vorgabe_schub rampenförmig gestaltet werden. Mittels Spätverstellung des Zündwinkels bzw. Ausblendung einzelner Zylinder der Verbrennungskraftmaschine 11 folgt das Istdrehmoment M_ice der Verbrennungskraftmaschine 11 dann näherungsweise ebenfalls rampenförmig dem rampenförmigen Sollmoment M_ice_soll.

Weiter ist günstig, bei unterschiedlicher Dynamik in den Momentenansteuerungen von Verbrennungskraftmaschine 11 und Elektromaschine 12 eine Kompensation in der Steuerung vorzusehen, z.B. indem der rampenförmige Übergang im Sollmoment M_ice_soll für die Verbrennungskraftmaschine 11 zeitlich versetzt zu dem entsprechenden Übergang im Sollmoment M_mg_soll für die Elektromaschine vorgegeben wird. Erfolgt die Momentenansteuerung der Elektromaschine 12 gegenüber der Momentenansteuerung der Verbrennungskraftmaschine 11 mit größerer Verzögerung, so gibt die Steuerung den rampenförmigen Übergang von M_mg_soll zeitlich vor dem entsprechenden Übergang von M_ice_soll vor. Der zeitliche Versatz wird anband des Dynamikunterschieds in den Momentenansteuerungen ermittelt.

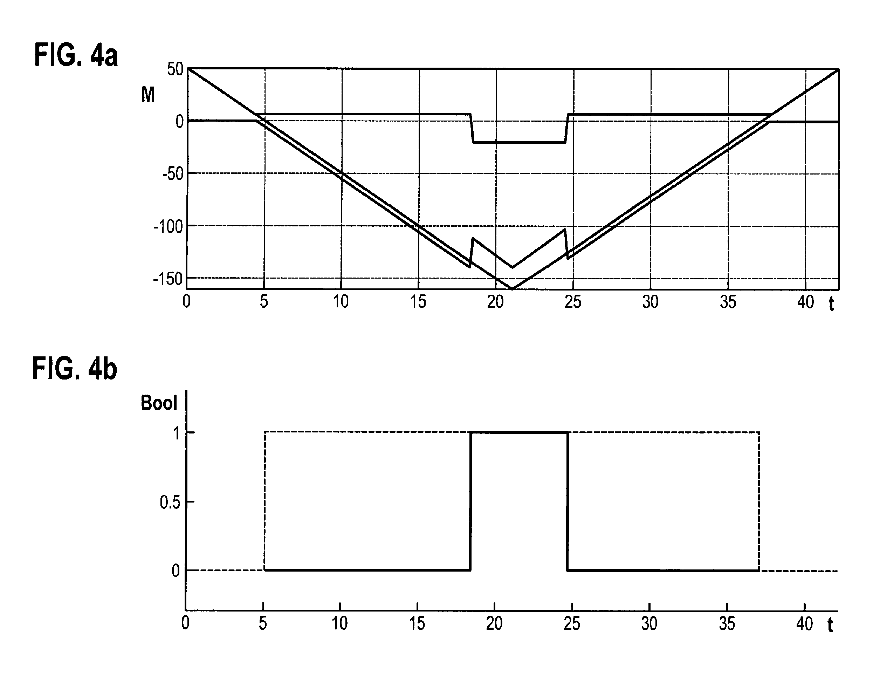

Die Abfolge der Sollmomente für Verbrennungskraftmaschine 11 und Elektromotor 12 über der Zeit t kann exemplarisch der Fig. 4a entnommen werden. Die obere Kurve zeigt den Verlauf M_ice_soll, die beiden unteren Kurven den Verlauf von M_soll und M_mg_soll.

M_ice_soll beginnt mit einer linearen Abfall und verläuft ab t=5 nahezu konstant, von einem stufenförmigen Abfall und Wiederanstieg zwischen 15<t<25 abgesehen. M_mg_soll beginnt mit einem konstanten Verlauf und nimmt bei t=5 in einen linearen V-förmigen Verlauf mit einem Minimum bei etwa t=21 an, der im gleichen Bereich zwischen 15<t<25 stufenartig erhöht wird. M_soll zeigt einen monotonen Abfall und Wiederanstieg mit einem Minimum bei t=21.

Im unteren Teil der Abbildung (Fig. 4b) ist bei dem angenommenen Sollmomentenverlauf M_soll zusätzlich zum Verlauf von B_schub auch der bisher realisierte Anteil des Schubbetriebs B_schub_bisher bei gleichem Sollmomentenverlauf eingezeichnet. Man erkennt eine deutliche Reduzierung der Dauer des Schubbetriebs auf einen entsprechenden Bereich zwischen 15<t<25.

## Patentansprüche

1. Verfahren zum Betreiben eines Fahrzeugs mit einem Hybridantrieb (10), wobei der Hybridantrieb (10) als Antriebsmaschinen eine Verbrennungskraftmaschine (11) und wenigstens eine Elektromaschine (12) aufweist, wobei die Antriebsmaschinen zusammenwirken, wobei zur Realisierung eines negativen Antriebsstrangsollmoments (M_soll) das negative Antriebsstrangsollmoment (M_soll) durch die Elektromaschine (12) aufgebracht wird und die Verbrennungskraftmaschine (11) weitestgehend außerhalb ihres Schubbetriebs betrieben wird, wobei falls doch Schubbetrieb erforderlich ist, zur Generierung einer Schubanforderung (B_schub) der Verbrennungskraftmaschine (11), das angeforderte Antriebsstrangsollmoment (M_soll) mit einem skalierten minimal möglichen Elektromaschinenmoment (M_mg_min) verglichen wird **dadurch gekennzeichnet dass** bei Unterschreiten einer ersten Schwelle (S1) des Vergleichswerts eine Schubanforderung (B schub) der Verbrennungskraftmaschine (11) generiert wird.

2. Verfahren nach Anspruch 1, **dadurch gekennzeichnet, dass** falls ein Schubbetrieb eingeleitet werden muss, dieser möglichst lange aufrechterhalten wird.

3. Verfahren nach Anspruch 2, **dadurch gekennzeichnet, dass** die maximale Dauer des Schubbetriebs durch Anforderungen aus einem Abgasnachbehandlungssystem begrenzt wird.

4. Verfahren nach einem der vorhergehenden Ansprüche, **dadurch gekennzeichnet, dass** Änderungen im abgegebenen Moment (M_ice) der Verbrennungskraftmaschine (11) bei Übergängen zwischen Schubbetrieb und befeuertem Betrieb durch ein Moment (M_mg) der Elektromaschine (12) kompensiert werden.

5. Verfahren nach Anspruch 1, **dadurch gekennzeichnet, dass** die Schubanforderung (B_schub) so lange erhalten bleibt, bis der Vergleichswert eine zweite Schwelle (S2) überschreitet.

6. Verfahren nach einem der vorhergehenden Ansprüche, **dadurch gekennzeichnet, dass**, falls keine Schubanforderung (B_schub) vorliegt, an die Verbrennungskraftmaschine (11) ein erstes Sollmoment aus einer Maximalwertauswahl eines vorgegebenen Moments (M_ice_vorgabe_normal) in Abhängigkeit vom angeforderten negativen Antriebsstrangsollmoment (M_soll) und einem minimal möglichen Moment (M_ice_min_verb) der Verbrennungskraftmaschine (11) im befeuerten Betrieb ausgegeben wird.

7. Verfahren nach einem der vorhergehenden Ansprüche, **dadurch gekennzeichnet, dass**, falls eine Schubanforderung (B_schub) vorliegt, an die Verbrennungskraftmaschine ein zweites Sollmoment (M_ice_vorgabe_schub) ausgegeben wird, das dem Schleppmoment der Verbrennungskraftmaschine (11) bei der aktuellen Drehzahl entspricht.

8. Verfahren nach Anspruch 8, **dadurch gekennzeichnet, dass** mindestens ein Übergang zwischen dem ersten Sollmoment und dem zweiten Sollmoment (M_ice_vorgabe_schub) rampenförmig gebildet wird.

9. Verfahren nach einem der vorhergehenden Ansprüche, **dadurch gekennzeichnet, dass** bei unterschiedlicher Dynamik in den Momentenansteuerungen von Verbrennungskraftmaschine (11) und Elektromaschine (12) eine Kompensation in der Steuerung erfolgt.

10. Verfahren nach einem der vorhergehenden Ansprüche, **dadurch gekennzeichnet, dass** das angeforderte Antriebsstrangsollmoment (M_soll) mit dem minimal möglichen Elektromaschinenmoment (M_mg_min) multipliziert mit einem applizierbaren Wert (K_mg) verglichen und die Differenz mit einem oberen und einem unteren Schwellwert (S1, S2) verglichen wird.

11. Verfahren nach Anspruch 10., **dadurch gekennzeichnet, dass** die Schwellwerte (S1, S2) abhängig von der aktuellen Drehzahl und/oder von dem minimalen Moment der Verbrennungskraftmaschine (11) im befeuerten Betrieb bei optimalem und/oder bei schlechtestem Zündwinkelwirkungsgrad und/oder von einem Schleppmoment der Verbrennungskraftmaschine (11) und/oder von einer Katalysatortemperatur und/oder von einem aktuell abgegebenen Moment der Verbrennungskraftmaschine (11) sind.

## Claims

1. Method for operating a vehicle having a hybrid drive (10), wherein the hybrid drive (10) has an internal combustion engine (11) and at least one electric machine (12) as drive machines, wherein the drive machines interact, wherein to realize a negative drivetrain setpoint torque (M_soll), the negative drivetrain setpoint torque (M_soll) is imparted by the electric machine (12) and the internal combustion engine (11) is operated to the greatest possible extent outside its overrun operating mode,
wherein if overrun operation is however necessary, to generate an overrun demand (B_schub) of the internal combustion engine (11), the demanded drivetrain setpoint torque (M_soll) is compared with a scaled minimum possible electric machine torque (M_mg_min), **characterized in that** an overrun demand (B_schub) of the internal combustion engine (11) is generated if a first threshold (S1) of the comparison value is undershot.

2. Method according to Claim 1, **characterized in that**, if overrun operation must be initiated, this is maintained for as long as possible.

3. Method according to Claim 2, **characterized in that** the maximum duration of the overrun operation is limited by demands from an exhaust-gas aftertreatment system.

4. Method according to one of the preceding claims **characterized in that** changes in the output torque (M_ice) of the internal combustion engine (11) at transitions between overrun operation and fired operation are compensated by a torque (M_mg) of the electric machine (12).

5. Method according to Claim 1, **characterized in that** the overrun demand (B_schub) is maintained until the comparison value exceeds a second threshold (S2).

6. Method according to one of the preceding claims, **characterized in that**, if no overrun demand (B_schub) is present, there is output to the internal combustion engine (11) a first setpoint torque from a maximum value selection of a predefined torque (M_ice_vorgabe_normal) as a function of the demanded negative drivetrain setpoint torque (M_soll) and of a minimum possible torque (M_ice_min_verb) of the internal combustion engine (11) in fired operation.

7. Method according to one of the preceding claims, **characterized in that**, if an overrun demand (B_schub) is present, there is output to the internal combustion engine a second setpoint torque (M_ice_vorgabe_schub) which corresponds to the drag torque of the internal combustion engine (11) at the present rotational speed.

8. Method according to Claim 8, **characterized in that** at least one transition between the first setpoint torque and the second setpoint torque (M_ice_vorgabe_schub) is of ramp-shaped form.

9. Method according to one of the preceding claims, **characterized in that**, in the case of varying dynamics in the respective torque control of the internal combustion engine (11) and the electric machine (12), compensation is provided in the control.

10. Method according to one of the preceding claims, **characterized in that** the demanded drivetrain setpoint torque (M_soll) is compared with the minimum possible electric machine torque (M_mg_min) multiplied by an applicable value (K_mg) and the difference is compared with an upper and a lower threshold value (S1, S2).

11. Method according to Claim 10, **characterized in that** the threshold values (S1, S2) are dependent on the present rotational speed and/or on the minimum torque of the internal combustion engine (11) in fired operation with the optimum ignition angle efficiency and/or with the poorest ignition angle efficiency and/or on a drag torque of the internal combustion engine (11) and/or on a catalytic converter temperature and/or on a torque presently output by the internal combustion engine (11).

## Revendications

1. Procédé d'exploitation d'un véhicule muni d'une propulsion hybride (10), la propulsion hybride (10) présentant comme machines d'entraînement une machine à combustion interne (11) et au moins une machine électrique (12), les machines d'entraînement interagissant, la réalisation d'un moment de consigne de chaîne motrice négatif (M_soll) étant effectuée en appliquant le moment de consigne de chaîne motrice négatif (M_soll) par la machine électrique (12) et la machine à combustion interne (11) étant utilisée de manière étendue en-dehors de son mode de propulsion, procédé selon lequel, si le mode de propulsion est tout de même nécessaire, pour générer une demande de propulsion (B_shub) de la machine à combustion interne (11), le moment de consigne de chaîne motrice (M_soll) demandé est comparé avec un moment de machine électrique minimum possible (M_mg_min) mis à l'échelle, **caractérisé en ce qu'**une demande de propulsion (B_schub) de la machine à combustion interne (11) est générée lorsque la valeur de comparaison devient inférieure à un premier seuil (S1).

2. Procédé selon la revendication 1, **caractérisé en ce que** dans le cas où il faut initier un mode de propulsion, celui-ci est maintenu pendant le plus longtemps possible.

3. Procédé selon la revendication 2, **caractérisé en ce que** la durée maximale du mode de propulsion est limitée par des demandes provenant d'un système de post-traitement des gaz d'échappement.

4. Procédé selon l'une des revendications précédentes, **caractérisé en ce que** des modifications dans le moment délivré (M_ice) de la machine à combustion interne (11) lors des transitions entre le mode de propulsion et le mode en combustion sont compensées par un moment (M_mg) de la machine électrique (12).

5. Procédé selon la revendication 1, **caractérisé en ce que** la demande de propulsion (B_schub) est maintenue jusqu'à ce que la valeur de comparaison devienne supérieure à un deuxième seuil (S2).

6. Procédé selon l'une des revendications précédentes, **caractérisé en ce qu'**en l'absence de demande de propulsion (B_schub), un premier moment de consigne est délivré au niveau de la machine à combustion interne (11) à partir d'une sélection de valeur maximale d'un moment prédéfini (M_ice_vorgabe_normal) en fonction du moment de consigne de chaîne motrice négatif (M_soll) demandé et d'un moment minimum possible (M_ice_min_verb) de la machine à combustion interne (11) en mode en combustion.

7. Procédé selon l'une des revendications précédentes, **caractérisé en ce qu'**en présence d'une demande de propulsion (B_schub), un deuxième moment de consigne (M_ice_vorgabe_schub) est délivré au niveau de la machine à combustion interne (11), lequel correspond au moment de remorquage de la machine à combustion interne (11) à la vitesse de rotation actuelle.

8. Procédé selon la revendication 8, **caractérisé en ce qu'**au moins une transition est formée sous la forme d'une rampe entre le premier moment de consigne et le deuxième moment de consigne (M_ice_vorgabe_schub).

9. Procédé selon l'une des revendications précédentes, **caractérisé en ce que** dans le cas de dynamiques différentes dans les commandes du moment de la machine à combustion interne (11) et de la machine électrique (12), une compensation est effectuée dans la commande.

10. Procédé selon l'une des revendications précédentes, **caractérisé en ce que** le moment de consigne de chaîne motrice (M_soll) demandé est comparé avec le moment de machine électrique minimum possible (M_mg_min) multiplié par une valeur applicable (K_mg) et la différence est comparée avec une valeur de seuil supérieure et une inférieure (S1, S2).

11. Procédé selon la revendication 10, **caractérisé en ce que** les valeurs de seuil (S1, S2) sont dépendantes de la vitesse de rotation actuelle et/ou du moment minimum de la machine à combustion interne (11) en mode en combustion avec un degré de rendement d'angle d'allumage optimal et/ou le plus défavorable et/ou d'un moment de remorquage de la machine à combustion interne (11) et/ou d'une température de catalyseur et/ou d'un moment délivré actuellement de la machine à combustion interne (11).
